(19) Europäisches Patentamt
European Patent Office
Office européen des brevets

(11) **EP 4 636 359 A1**

(12) **EUROPEAN PATENT APPLICATION**
published in accordance with Art. 153(4) EPC

(43) Date of publication:
**22.10.2025 Bulletin 2025/43**

(21) Application number: **23902348.4**

(22) Date of filing: **02.11.2023**

(51) International Patent Classification (IPC):
**G01C 21/36** (2006.01)    **G01C 21/20** (2006.01)

(52) Cooperative Patent Classification (CPC):
**G01C 21/20; G01C 21/36**

(86) International application number:
**PCT/CN2023/129304**

(87) International publication number:
**WO 2024/125148 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.12.2022 CN 202211600351**

(71) Applicant: **Shenzhen Yinwang Intelligent
Technologies Co., Ltd.
Shenzhen, Guangdong 518129 (CN)**

(72) Inventors:
• **WANG, Chaoran**
  **Shenzhen, Guangdong 518129 (CN)**
• **QIAN, Chaojie**
  **Shenzhen, Guangdong 518129 (CN)**
• **ZENG, Xia**
  **Shenzhen, Guangdong 518129 (CN)**
• **CHEN, Anlin**
  **Shenzhen, Guangdong 518129 (CN)**
• **WANG, Xinyu**
  **Shenzhen, Guangdong 518129 (CN)**
• **JIN, Ziang**
  **Shenzhen, Guangdong 518129 (CN)**

(74) Representative: **Maiwald GmbH
Engineering
Elisenhof
Elisenstrasse 3
80335 München (DE)**

(54) **LANE SELECTION METHOD AND APPARATUS, AND COMPUTER DEVICE**

(57)    Embodiments of this application disclose a lane selection method and apparatus, and a computer device, and pertain to the field of intelligent driving technologies. The method includes: when it is determined that there is a bifurcation ahead of a lane on which a vehicle currently travels, determining, based on a quantity of lane changes needed for the vehicle to travel from each bifurcated lane to a next intersection on a navigation route, a navigation lane selection cost value corresponding to each bifurcated lane, and determining, based on a speed decrease needed for the vehicle to travel to each bifurcated lane, a deceleration lane selection cost value corresponding to each bifurcated lane; determining, based on the determined lane selection cost values, a comprehensive lane selection cost value corresponding to each bifurcated lane; and selecting, based on the comprehensive lane selection cost value corresponding to each bifurcated lane, a first lane from a plurality of bifurcated lanes as a lane into which the vehicle needs to travel. According to this application, a lane into which a vehicle needs to travel can be selected from a plurality of bifurcated lanes based on a plurality of types of lane selection cost values, thereby reducing a traveling risk of the vehicle.

When it is determined that there is a bifurcation ahead of a lane on which a vehicle currently travels, determine a plurality of types of lane selection cost values corresponding to each bifurcated lane — 501

Determine, based on the plurality of types of lane selection cost values corresponding to each bifurcated lane, a comprehensive lane selection cost value corresponding to each bifurcated lane — 502

Select, based on the comprehensive lane selection cost value corresponding to each bifurcated lane, a first lane from a plurality of bifurcated lanes as a lane into which the vehicle needs to travel — 503

FIG. 5

## Description

This application claims priority to Chinese Patent Application No. 202211600351. 7, filed on December 12, 2022 and entitled "LANE SELECTION METHOD AND APPARATUS, AND COMPUTER DEVICE", which is incorporated herein by reference in its entirety.

## TECHNICAL FIELD

This application relates to the field of intelligent driving technologies, and in particular, to a lane selection method and apparatus, and a computer device.

## BACKGROUND

With rapid development of the automotive industry, intelligent driving technologies (such as assisted driving technologies and autonomous driving technologies) are increasingly widely applied in vehicles.

In a current intelligent driving technology, a navigation system of a vehicle may plan a lane for the vehicle in advance in a traveling process based on a destination of the vehicle and a high-definition map.

In an actual driving scenario, a vehicle often encounters a situation in which a lane bifurcates, for example, one lane bifurcates into two lanes. Although a navigation system selects a bifurcated target lane for the vehicle in advance, the target lane may not be a current optimal selection of the vehicle due to a complex traffic condition at a lane bifurcation. For example, there are a large quantity of vehicles on another lane traveling to the target lane at a high speed. In this case, if the current vehicle still travels to the target lane, a traveling risk of the vehicle increases.

## SUMMARY

Embodiments of this application provide a lane selection method and apparatus, and a computer device, to reduce a traveling risk of a vehicle. Corresponding technical solutions are as follows.

According to a first aspect, a lane selection method is provided. The method may be applied to an autonomous driving system in a vehicle. The method includes: when it is determined that there is a bifurcation ahead of a lane on which the vehicle currently travels, determining, based on a quantity of lane changes needed for the vehicle to travel from each bifurcated lane to a next intersection on a navigation route, a navigation lane selection cost value corresponding to each bifurcated lane, and determining, based on a speed decrease needed for the vehicle to travel to each bifurcated lane, a deceleration lane selection cost value corresponding to each bifurcated lane; determining, based on the navigation lane selection cost value and the deceleration lane selection cost value, a comprehensive lane selection cost value corresponding to each bifurcated lane; and

selecting, based on the comprehensive lane selection cost value corresponding to each bifurcated lane, a first lane from a plurality of bifurcated lanes as a lane into which the vehicle needs to travel.

There are at least the following two cases in which a lane bifurcates. One case is that a lane is added to a road, that is, one or more lanes in the road bifurcate, increasing a quantity of lanes in the road. For example, when a straight road is increased from two lanes to three lanes, one of the original two lanes may bifurcate into two lanes, so that a quantity of lanes in the straight road is increased. Another case is that a road bifurcates, that is, a lane near a bifurcation is divided into two lanes, where one lane is a lane in the original road, and the other lane is a lane leading to another road. For example, a ramp intersection appears on a highway. In this case, it may be considered that a lane near the ramp intersection bifurcates into two lanes, where one lane is on the highway, and the other lane is on a ramp.

In the solution shown in this application, when determining that there is a bifurcation ahead of a lane on which a vehicle currently travels, an autonomous driving system in the vehicle may determine, based on a detection cycle, a navigation lane selection cost value and a deceleration lane selection cost value that correspond to each bifurcated lane, and then determine, based on the navigation lane selection cost value and the deceleration lane selection cost value, a comprehensive lane selection cost value corresponding to each bifurcated lane, and finally determine a lane corresponding to a lowest comprehensive lane selection cost value as a lane into which the vehicle needs to travel. It can be learned that in this application, when encountering a bifurcation lane during a traveling process, a vehicle can comprehensively consider navigation information corresponding to each bifurcated lane and a case in which the vehicle travels into each bifurcated lane, and select a lane with a minimum comprehensive lane selection cost value from a plurality of bifurcated lanes, so that a traveling risk can be reduced.

In an optional manner, a lane selection cost value based on which the comprehensive lane selection cost value is determined further includes a steering lane selection cost value. The steering lane selection cost value indicates a steering angle needed for a vehicle to travel to a bifurcated lane. A larger steering angle indicates a larger distance for the vehicle to move laterally, and a higher probability that the vehicle collides with another vehicle.

A lane selection cost value calculation method may be as follows: determining an angle between each bifurcated lane and a current lane at a lane bifurcation, and determining, based on the angle between each bifurcated lane and the current lane at the lane bifurcation, a steering lane selection cost value corresponding to each bifurcated lane. A larger angle indicates a larger corresponding steering lane selection cost value.

In an optional manner, the lane selection cost value based on which the comprehensive lane selection cost value is determined further includes a side vehicle risk lane selection cost value. The side vehicle risk lane selection cost value indicates a risk of collision with a side vehicle during a process of driving a vehicle to a bifurcated lane. A larger side vehicle risk lane selection cost value indicates higher risk of collision between the vehicle and the side vehicle.

A method for calculating the side vehicle risk lane selection cost value may be as follows: determining, based on a speed of the side vehicle of the vehicle, a side vehicle risk lane selection cost value corresponding to each bifurcated lane.

In an optional manner, the determining, based on a speed of the side vehicle of the vehicle, a side vehicle risk lane selection cost value corresponding to each bifurcated lane includes: determining a collision risk value between the vehicle and the side vehicle in each bifurcated lane based on a speed of the vehicle and the speed of the side vehicle of the vehicle; and determining, based on the collision risk value corresponding to each bifurcated lane, the side vehicle risk lane selection cost value corresponding to each bifurcated lane. Whether there is a possibility that a side vehicle travels into each bifurcated lane may be determined. For each bifurcated lane, if a side vehicle cannot travel into the lane, a side vehicle risk lane selection cost value corresponding to the lane may be set to 0. If a side vehicle may travel into the lane, a side vehicle risk lane selection cost value corresponding to the lane may be calculated based on a current speed of the vehicle and a speed of the side vehicle that may travel into the lane.

In an optional manner, the lane selection cost value based on which the comprehensive lane selection cost value is determined further includes a bifurcation distance lane selection cost value. The bifurcation distance lane selection cost value indicates a traveling risk corresponding to a bifurcated lane to which a vehicle needs to switch. A shorter distance between the vehicle and a lane bifurcation indicates a higher traveling risk corresponding to the bifurcated lane to which the vehicle needs to switch, and a larger bifurcation distance lane selection cost value.

A method for calculating the bifurcation distance lane selection cost value may be as follows: if a first distance between the bifurcation and the vehicle is currently less than or equal to a distance threshold, and a second distance between the bifurcation and the vehicle in a previous detection cycle is greater than a threshold, determining a specified value as a bifurcation distance lane selection cost value corresponding to each bifurcated lane; or if a first distance between the bifurcation and the vehicle is currently less than or equal to a distance threshold, and a second distance between the bifurcation and the vehicle in a previous detection cycle is less than or equal to the distance threshold, determining, based on the first distance and a second lane that is selected in the previous detection cycle, a bifurcation distance lane selection cost value corresponding to each bifurcated lane.

After determining that there is the bifurcation ahead of the lane on which the vehicle currently travels, the autonomous driving system in the vehicle may determine, based on the detection cycle, the comprehensive lane selection cost value corresponding to each bifurcated lane, determine the lane corresponding to the lowest comprehensive lane selection cost value as the lane into which the vehicle is to travel, and may control the vehicle to start traveling into the selected lane. However, if the vehicle selects different lanes in a plurality of detection cycles, the vehicle may frequently switch a traveling direction. As a result, a traveling risk of the vehicle increases, and ride experience of a person in the vehicle is affected. In the solution shown in this application, a bifurcation distance lane selection cost value is set to prevent a vehicle from frequently switching a traveling direction. As a distance between the vehicle and a lane bifurcation is shorter, a bifurcation distance lane selection cost value corresponding to a lane that is not selected in a previous detection cycle is larger. In this way, as the distance between the vehicle and the lane bifurcation becomes shorter, it is more likely that the vehicle selects a same lane in a current detection cycle as in the previous detection cycle. This can prevent the vehicle from frequently switching the traveling direction, reduce a traveling risk, and improve ride experience of a person in the vehicle.

In an optional manner, the determining, based on the first distance and a second lane that is selected in the previous detection cycle, a bifurcation distance lane selection cost value corresponding to each bifurcated lane includes: determining a bifurcation distance lane selection cost value corresponding to the second lane as 0; and determining, based on the first distance, a bifurcation distance lane selection cost value corresponding to another lane other than the second lane, where a smaller first distance indicates a larger corresponding bifurcation distance lane selection cost value.

In an optional manner, after the first lane is selected from the plurality of bifurcated lanes, prompt information may be displayed on a navigation interface of the vehicle. The prompt information indicates that the vehicle is to travel into the first lane. For example, the first lane may be highlighted on the navigation interface of the vehicle. In this way, a driver may determine, based on the prompt, safety of the first lane into which the vehicle is to travel. If the driver currently has a high risk of driving the vehicle into the first lane, the vehicle can be manually intervened to further improve driving safety.

In an optional manner, after the prompt information is displayed on the navigation interface of the vehicle, whether the driver triggers a lane change instruction may be further detected. After the lane change instruction of the driver is detected, in response to the lane change instruction that carries a lane change direction, a third lane corresponding to the first lane in the lane change direction is determined as a lane into which the vehicle needs to travel.

After the third lane corresponding to the first lane in the lane change direction is determined, the prompt information may be switched on the navigation interface of the vehicle, and switched-to prompt information indicates that the vehicle is to travel into the third lane. For example, the lane switch from the first lane to the third lane may be highlighted on the navigation interface of the vehicle.

In an optional manner, the lane change instruction is triggered by a steering wheel or a control lever. If the driver wants to drive into a lane to the left of the first lane, the driver may gently turn the steering wheel to the left or push a light control lever downward.

According to a second aspect, this application provides a lane selection apparatus. The apparatus includes at least one module, and the at least one module is configured to implement the lane selection method provided in any one of the first aspect or the optional manners of the first aspect.

According to a third aspect, a computer device is provided. The computer device includes a memory and a processor, the memory is configured to store computer instructions, and the processor is configured to execute the computer instructions stored in the memory, so that the computer device performs the lane selection method provided in any one of the first aspect or the optional manners of the first aspect.

According to a fourth aspect, a computer-readable storage medium is provided. The computer-readable storage medium stores computer program code, and when the computer program code is executed by a computer device, the computer device performs the lane selection method provided in any one of the first aspect or the optional manners of the first aspect.

According to a fifth aspect, a computer program product is provided. The computer program product includes computer program code, and when the computer program code is executed by a computer device, the computer device performs the lane selection method provided in any one of the first aspect or the optional manners of the first aspect.

**BRIEF DESCRIPTION OF DRAWINGS**

FIG. 1 is a diagram of a bifurcation lane according to an embodiment of this application;
FIG. 2 is a diagram of a bifurcation lane according to an embodiment of this application;
FIG. 3 is a diagram of a system architecture of an intelligent driving system according to an embodiment of this application;
FIG. 4 is a diagram of a structure of a computer device according to an embodiment of this application;

FIG. 5 is a flowchart of a lane selection method according to an embodiment of this application;
FIG. 6 is a diagram of a bifurcation lane according to an embodiment of this application;
FIG. 7 is a diagram of a bifurcation lane according to an embodiment of this application;
FIG. 8 is a diagram of a bifurcation lane according to an embodiment of this application;
FIG. 9 is a flowchart of a lane selection method according to an embodiment of this application; and
FIG. 10 is a diagram of a structure of a lane selection apparatus according to an embodiment of this application.

**DESCRIPTION OF EMBODIMENTS**

To make the objectives, technical solutions, and advantages of this application clearer, the following further describes the implementations of this application in detail with reference to the accompanying drawings.

In an intelligent driving technology, a vehicle may plan a navigation route to a destination based on a current departure place and the destination entered by a driver. If the vehicle uses a lane-level navigation recommendation system for navigation, for example, uses a lane-level high-definition navigation map for navigation, a navigation route may include a road on which the vehicle needs to travel to reach a destination, and a lane on which the vehicle needs to travel on each road, such as a left-turn lane, a middle lane, or a right-turn lane. If the vehicle does not use a lane-level navigation recommendation system for navigation, a navigation route may include a road on which the vehicle needs to travel to reach a destination.

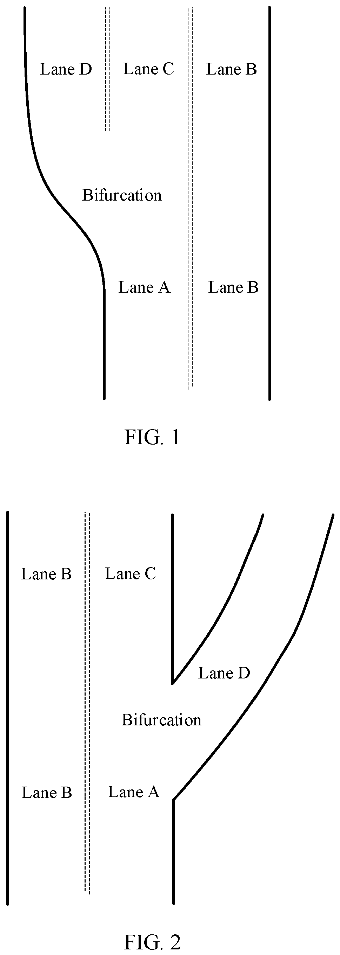

In an actual driving scenario, a lane may be bifurcated. There are at least the following two cases in which a lane bifurcates. One case is that a lane is added to a road, that is, one or more lanes in the road bifurcate, increasing a quantity of lanes in the road. As shown in FIG. 1, a first half of a one-way road includes two lanes (a lane A and a lane B), and in a second half of the one-way road, the lane A bifurcates into a lane C and a lane D. In this way, the one-way road is increased from the two lanes to three lanes. Another case is that a road bifurcates, that is, a lane near a bifurcation is divided into two lanes, where one lane is a lane in the original road, and the other lane is a lane leading to another road. As shown in FIG. 2, a ramp intersection appears on a highway. In FIG. 2, a rightmost lane A on the ramp intersection is divided into a lane C on the highway and a lane D on a ramp.

If a vehicle uses a lane-level navigation recommendation system for navigation, a lane on which the vehicle needs to travel is planned on a navigation route. Therefore, when the lane on which the vehicle travels bifurcates, a lane into which the current vehicle needs to travel in a plurality of bifurcated lanes is planned on the navigation route. However, the lane planned in the navigation route may not be an optimal choice of the current vehicle in the plurality of bifurcated lanes due to a complex traffic condition at the lane bifurcation. For example, if a lane planned in the navigation route is congested, and a vehicle on another lane also travels into the lane, the current vehicle needs to perform emergency braking during traveling into the lane. In this case, a probability of rear-ending on the current vehicle increases, and a probability that the current vehicle collides with a vehicle on the lane that is planned in the navigation route also increases. Therefore, a traveling risk of the vehicle increases, and ride experience of a person in the vehicle is also affected. However, if a vehicle does not use a lane-level navigation recommendation system for navigation, when a lane on which the vehicle travels bifurcates, a driver needs to select, from a plurality of bifurcated lanes, a lane into which the vehicle needs to travel, and the driver manually controls the vehicle, to drive the vehicle into a corresponding lane.

An embodiment of this application provides a lane selection method, so that when a lane on which a vehicle travels bifurcates, a lane corresponding to a low traveling risk can be flexibly selected from a plurality of bifurcated lanes. The method may be applied to an intelligent driving system in a vehicle. For ease of understanding the lane selection method provided in this embodiment of this application, the following describes the intelligent driving system.

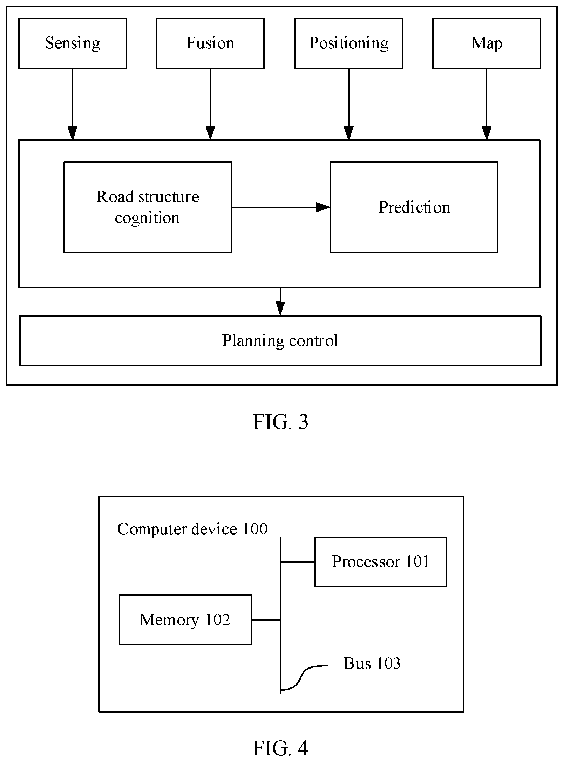

FIG. 3 is a diagram of a system architecture of an intelligent driving system according to this application. Refer to FIG. 3. The intelligent driving system may include a sensing module, a fusion module, a positioning module, a map module, a road structure cognition module, a prediction module, and a planning control module. An input of the sensing module is detection data corresponding to a vehicle-mounted sensor, for example, point cloud data obtained through scanning by a lidar or image data obtained through shooting by a camera. A corresponding output is a lane line, a surrounding object (a vehicle or an obstacle), and the like that are identified based on each type of detection data. The fusion module performs fusion processing on objects that are output by the sensing module and that are identified based on different types of detection data, and outputs types, positions, speeds, and the like corresponding to the objects. The road structure cognition module may generate a road model around a current vehicle based on a lane line output by the sensing module and an obstacle output by the fusion module. The positioning module is configured to determine a location of the vehicle, and the map module stores a navigation map. The prediction module is an intermediate inference layer between the sensing module, the fusion module, the positioning module, the map module, the road structure cognition module, and the like, and the planning control module in the intelligent driving system, and is responsible for predicting an intention and a track of each object around a vehicle. The intention means a driving/motion behavior of the object, and the track means a future location/speed of the object. The intention and the track vary depending on an object type, for example, lane change of a vehicle, pedestrian crossing, or another working condition. The planning control module makes a behavior decision based on a road structure, an intention and a predicted track of an obstacle, generates an expected track and a corresponding control value, and finally outputs the expected track and the corresponding control value to an executor to control traveling of the vehicle. In an example, the lane selection method provided in this application may be applied to the planning control module in the intelligent driving system.

FIG. 4 is a diagram of a structure of a computer device according to an embodiment of this application. The computer device may be configured to run an autonomous driving system, and perform the lane selection method provided in this application. The computer device may be a vehicle-mounted terminal. Refer to FIG. 4. A computer device 100 includes at least a processor 101, a memory 102, and a bus 103. The processor 101 may be a central processing unit (central processing unit, CPU), and the memory 102 may be a volatile memory (volatile memory), for example, may be a random access memory (random access memory, RAM), or may be a non-volatile memory (non-volatile memory), for example, a read-only memory (read-only memory, ROM) or a solid-state drive (solid-state drive, SSD). The processor 101 and the memory 102 may be connected through the bus 103, to implement data transmission. In addition, various types of vehicle-mounted sensors such as a lidar, a distance sensor, and a camera may be installed on a vehicle controlled by the computer device 100. These vehicle-mounted sensors may be connected to the processor 101 or the memory 102 through the bus 103, to implement data transmission.

The memory 102 may store executable program code, and the processor 101 may load and execute the executable program code from the memory 102, to implement the lane selection method provided in this application, for example, may implement the following: when it is determined that there is a bifurcation ahead of a lane on which a vehicle currently travels, determining, based on a quantity of lane changes needed for the vehicle to travel from each bifurcated lane to a next intersection on a navigation route, a navigation lane selection cost value corresponding to each bifurcated lane, and determining, based on a speed decrease needed for the vehicle to travel to each bifurcated lane, a deceleration lane selection cost value corresponding to each bifurcated lane; determining, based on the navigation lane selection cost value and the deceleration lane selection cost value, a comprehensive lane selection cost value corresponding to each bifurcated lane; and selecting, based on the comprehensive lane selection cost value corresponding to each bifurcated lane, a first lane from a plurality of bifurcated lanes as a lane into which the vehicle needs to travel.

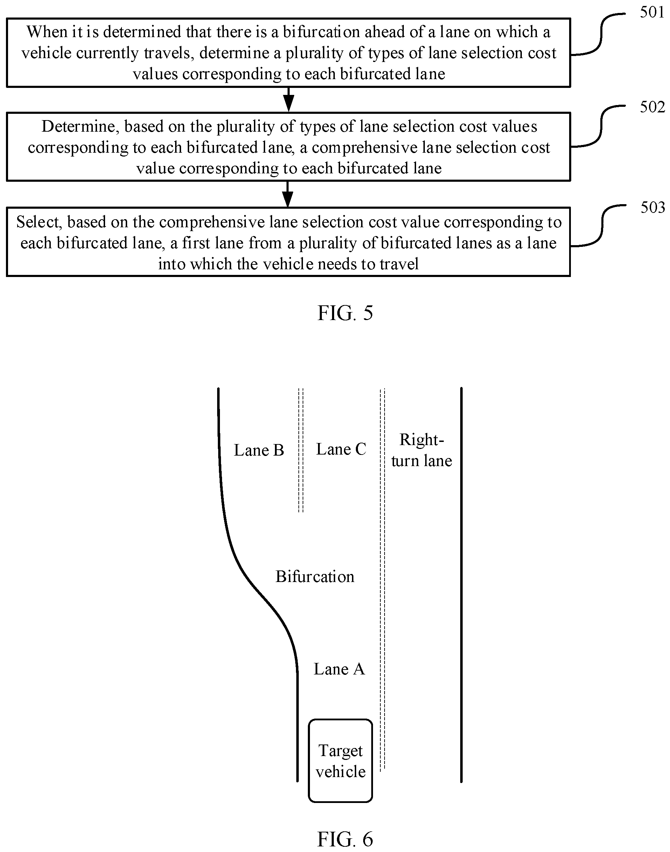

FIG. 5 is a flowchart of a lane selection method according to this application. The solution may be performed by the vehicle-mounted terminal. Refer to FIG. 5. The method includes the following steps.

Step 501: When it is determined that there is a bifurcation ahead of a lane on which a vehicle currently travels, determine a plurality of types of lane selection cost values corresponding to each bifurcated lane.

During implementation, the vehicle may determine, based on a specified detection cycle, whether there is a bifurcation ahead of the lane on which the vehicle currently travels. When it is determined that there is the bifurcation ahead of the lane on which the vehicle currently travels and a bifurcated lane selection condition is met, the vehicle-mounted terminal may start to calculate the plurality of types of lane selection cost values corresponding to each bifurcated lane. The bifurcated lane selection condition may be that a distance between the vehicle and the bifurcation of the lane ahead is less than or equal to a first distance threshold. For example, the first distance threshold may be 100 meters.

In a possible case, the vehicle-mounted terminal may determine a current location of the vehicle based on a positioning module, and then determine, based on a high-definition map stored in a map module, whether there is a bifurcation ahead of a lane on which the vehicle is currently located. In another possible case, the vehicle-mounted terminal may determine, based on a road model generated by a road structure cognition module, a lane on which the vehicle is currently located and whether there is a bifurcation ahead of the lane on which the vehicle is currently located.

When it is determined that there is a bifurcation ahead of the lane on which the vehicle currently travels and a bifurcated lane selection condition is met, the vehicle-mounted terminal may start to calculate the plurality of types of lane selection cost values corresponding to each bifurcated lane. The lane selection cost value indicates a cost needed for the vehicle to travel to a corresponding bifurcated lane. A larger lane selection cost value corresponding to a bifurcated lane indicates a lower probability that the vehicle travels to the bifurcated lane. The plurality of types of lane selection cost values include at least a navigation lane selection cost value and a deceleration lane selection cost value.

The navigation lane selection cost value is a lane selection cost value that corresponds to each bifurcated lane and that is determined based on a navigation route of a vehicle to a destination. In an example, calculation of the navigation lane selection cost value may include: determining, based on a quantity of lane changes needed for a vehicle to travel from each bifurcated lane to a next intersection on a navigation route, a navigation lane selection cost value corresponding to each bifurcated lane.

The next intersection is a next intersection that the vehicle needs to travel into during a traveling process based on the navigation route. The vehicle may need to go straight, turn left, turn right, or turn around during traveling to the next intersection. The vehicle-mounted terminal may determine the quantity of lane changes needed for the vehicle to travel to the next intersection after traveling to each bifurcated lane, and determine the navigation lane selection cost value corresponding to each bifurcated lane. For example, when the vehicle needs to go straight to the next intersection, navigation lane selection cost values corresponding to all bifurcated lanes may be equal. When the vehicle needs to turn right to the next intersection, the vehicle needs to travel to a right-turn lane before traveling to the next intersection. In this way, in the plurality of bifurcated lanes, a quantity of lane changes needed to travel from a rightmost lane to the right-turn lane is the smallest, and a corresponding navigation lane selection cost value is the lowest. A quantity of lane changes needed to travel from a leftmost lane to the right-turn lane is the largest, and a corresponding navigation lane selection cost value is the highest. A correspondence between a quantity of lane changes and a navigation lane selection cost value may be prestored in the vehicle-mounted terminal. After the quantity of lane changes needed for the vehicle to travel from each bifurcated lane to the next intersection on the navigation route is determined, the navigation lane selection cost value corresponding to each bifurcated lane may be determined based on the correspondence.

As shown in FIG. 6, during a process of traveling on a lane A, a vehicle detects a bifurcation ahead of the lane A, and bifurcated lanes include a lane B and a lane C. On a navigation route, if the vehicle needs to turn right at a next intersection, the vehicle needs to change a lane twice to travel from the lane B to a right-turn lane, and needs to change a lane once to travel from the lane C to the right-turn lane. In this way, a navigation lane selection cost value corresponding to each of the lane B and the lane C may be determined based on a correspondence between a quantity of lane changes and a navigation lane selection cost value. For example, a navigation lane selection cost value corresponding to the lane B is 0.6, and a navigation lane selection cost value corresponding to the lane C is 0.3.

In addition, in a case shown in FIG. 2, when a lane leading to another road exists in bifurcated lanes, if the lane is not a lane on the navigation route, a quantity of lane changes needed to travel from the lane to a next intersection on the navigation route is greater than that of another lane on the navigation route. Therefore, in this case, a navigation lane selection cost value corresponding to the lane is greater than a navigation lane selection cost value corresponding to the another lane on the navigation route. Therefore, there is a low probability that the vehicle selects the lane as a lane to enter. In a possible case, when the navigation lane selection cost value corresponding to each bifurcated lane is determined, a distance from the bifurcated lane to the next intersection on the navigation route may be further added. In this way, for a lane leading to another road in bifurcated lanes, if the lane is not a lane on the navigation route, a quantity of lane changes needed to travel from the lane to a next intersection on the navigation route and a corresponding distance are greater than those for another lane on the navigation route, and a navigation lane selection cost value corresponding to the lane is far greater than a navigation lane selection cost value corresponding to the another lane on the navigation route. Therefore, there is a low probability that the vehicle selects the lane as a lane to enter.

In a possible implementation, in addition to consideration of the quantity of lane changes needed for the vehicle to travel to the next intersection on the bifurcated lane, the navigation lane selection cost value may be calculated based on whether a bifurcated lane is a to-be-merged lane and whether a bifurcated lane includes a to-be-merged lane or a stop station. For example, when a bifurcated lane is a to-be-merged lane, that is, when the bifurcated lane is a lane that merges into another lane, a first cost value may be added in addition to a lane selection cost value that is calculated based on a quantity of lane changes, so as to obtain a navigation lane selection cost value corresponding to the bifurcated lane. For example, when a bifurcated lane includes a to-be-merged lane, that is, there is another lane merging into the bifurcated lane, a second cost value may be added in addition to a lane selection cost value that is calculated based on a quantity of lane changes, so as to obtain a navigation lane selection cost value corresponding to the bifurcated lane. For another example, when a bifurcated lane has a stop station, that is, there is a stop station (for example, a bus station) next to the bifurcated lane, a third cost value may be added in addition to a lane selection cost value that is calculated based on a quantity of lane changes, so as to obtain a navigation lane selection cost value corresponding to the bifurcated lane. The first cost value, the second cost value, and the third cost value may be preset by a skilled person, and specific values of the first cost value, the second cost value, and the third cost value are not limited. The foregoing manners of calculating the navigation lane selection cost value based on the first cost value, the second cost value, the third cost value, and the lane selection cost value that is calculated based on the quantity of lane changes are merely examples for description. A skilled person may further calculate the navigation lane selection cost value based on another calculation manner, for example, calculating a mean value or performing weighted summation.

The deceleration lane selection cost value is a lane selection cost value determined based on a speed decrease needed for a vehicle to travel to a bifurcated lane. A larger deceleration lane selection cost value indicates that the vehicle needs to reduce a speed by more to safely travel into a corresponding bifurcated lane. In other words, a larger deceleration lane selection cost value indicates a larger braking degree needed by the vehicle and a higher traveling risk. In addition, a larger deceleration lane selection cost value indicates greater impact on ride experience of a passenger in the vehicle.

In an example, calculation of the deceleration lane selection cost value may include: determining, based on a speed decrease needed for a vehicle to travel to each bifurcated lane, a deceleration lane selection cost value corresponding to each bifurcated lane.

The vehicle-mounted terminal may determine, based on a fusion module, a first vehicle speed corresponding to a vehicle closest to the vehicle in each bifurcated lane, and then determine a speed difference between a second vehicle speed of the vehicle and the first vehicle speed, so as to determine the deceleration lane selection cost value corresponding to each bifurcated lane. For example, the vehicle-mounted terminal may prestore a correspondence between the speed difference and the deceleration lane selection cost value. After determining the speed difference corresponding to the vehicle traveling to each bifurcated lane, the vehicle-mounted terminal may determine the corresponding deceleration lane selection cost value based on the correspondence.

In addition, the plurality of types of lane selection cost values may further include a steering lane selection cost value, a side vehicle risk lane selection cost value, and a bifurcation distance lane selection cost value. The three lane selection cost values are not described in detail herein.

Step 502: Determine, based on the plurality of types of lane selection cost values corresponding to each bifurcated lane, a comprehensive lane selection cost value corresponding to each bifurcated lane.

In an example, the plurality of types of lane selection cost values corresponding to each bifurcated lane may be accumulated, to obtain the comprehensive lane selection cost value corresponding to each bifurcated lane. For example, a navigation lane selection cost value and a deceleration lane selection cost value that correspond to each bifurcated lane may be accumulated, to obtain the comprehensive lane selection cost value corresponding to each bifurcated lane.

In another example, a person skilled in the art may preset a corresponding weight value for each lane selection cost value. After the plurality of types of lane selection cost values corresponding to each bifurcated lane are determined, weighted summation may be performed, based on the weight value corresponding to each lane selection cost value, on the plurality of types of lane selection cost values corresponding to each bifurcated lane, to obtain the comprehensive lane selection cost value corresponding to each bifurcated lane. For example, if a weight value corresponding to a navigation lane selection cost value is 0.6, and a weight value corresponding to a deceleration lane selection cost value is 0.4, Comprehensive lane selection cost value=0.6×Navigation lane selection cost value+0.4×Deceleration lane selection cost value.

Step 503: Select, based on the comprehensive lane selection cost value corresponding to each bifurcated lane, a first lane from the plurality of bifurcated lanes as a lane into which the vehicle needs to travel.

After the comprehensive lane selection cost value corresponding to each bifurcated lane is determined, a lane (that is, the first lane) corresponding to a lowest comprehensive lane selection cost value in the plurality of bifurcated lanes may be determined as the lane into which the vehicle needs to travel.

It should be noted that, after it is determined in step 501 that the bifurcated lane selection condition is currently met, a plurality of types of lane selection cost values corresponding to each bifurcated lane may be determined based on a detection cycle. In addition, a comprehensive lane selection cost value corresponding to each bifurcated lane is determined based on the plurality of types of lane selection cost values corresponding to each bifurcated lane. Then, a first lane into which the vehicle needs to travel is selected from a plurality of bifurcated lanes based on the comprehensive lane selection cost value corresponding to each bifurcated lane. In other words, the foregoing steps 501 to 503 are performed periodically, and in each cycle, the first lane into which the vehicle needs to travel may be selected from the plurality of bifurcated lanes.

In a process of selecting, based on the detection cycle, the first lane into which the vehicle needs to travel, if it is detected that the vehicle meets a lane change condition, the vehicle may be controlled to start traveling to the first lane determined in each monitoring cycle. For example, the lane change condition may be that a distance between the vehicle and a bifurcation is less than or equal to a second distance threshold. The second distance threshold is less than or equal to the second distance threshold, for example, may be 60 meters.

Generally, a condition on each lane does not change suddenly (for example, a sudden change of a vehicle speed or a sudden appearance of an obstacle). Therefore, first lanes determined in a plurality of consecutive detection cycles are usually a same lane. In other words, during a process of traveling to the first lane, the vehicle does not change a lane suddenly.

If a target lane is in bifurcated lanes and it is detected that there is no bifurcation ahead of a lane on which the vehicle is currently located, it indicates that the vehicle completely travels into the bifurcated lane. Therefore, processing of selecting a lane from the plurality of bifurcated lanes based on the detection cycle may be ended.

In this embodiment provided in this application, when a lane on which a vehicle travels bifurcates, a lane into which the vehicle needs to travel may be selected from a plurality of bifurcated lanes based on comprehensive navigation information, a braking degree needed for the vehicle to travel to each bifurcated lane, and the like. In this way, flexibility of selecting a bifurcated lane may be improved, and a traveling risk of the vehicle may be reduced.

The following separately describes the steering lane selection cost value, the side vehicle risk lane selection cost value, and the bifurcation distance lane selection cost value in step 501.

Steering lane selection cost value: indicates a steering angle needed for a vehicle to travel to a bifurcated lane. A larger steering angle indicates a larger distance for the vehicle to move laterally, a higher probability that the vehicle collides with another vehicle, and a higher traveling risk. In addition, a larger steering angle further affects traveling stability and ride comfort of the vehicle.

In an example, calculation of the steering lane selection cost value may include: determining, based on an angle between each bifurcated lane and a current lane at a bifurcation, a steering lane selection cost value corresponding to each bifurcated lane, where the steering lane selection cost value is positively correlated with the angle.

In the road structure cognition module, a model of a road ahead of the vehicle may be output. The vehicle-mounted terminal may calculate an included angle between each bifurcated lane and the current lane at the bifurcation based on the road model output by the road structure cognition module. A larger included angle indicates a larger angle that the vehicle needs to turn. A correspondence between the angle and the steering lane selection cost value may be prestored in the vehicle-mounted terminal. After the included angle between each bifurcated lane and the current lane at the bifurcation is determined, the steering lane selection cost value corresponding to each bifurcated lane may be determined based on the correspondence.

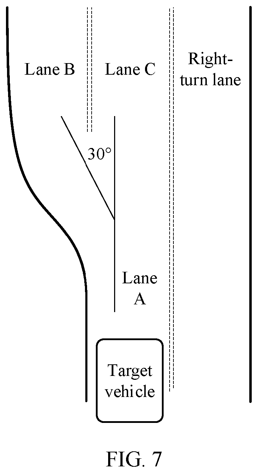

As shown in FIG. 7, an included angle between a lane A on which the vehicle currently travels and a bifurcated lane B, and an included angle between the lane A and a bifurcated lane C are respectively 30° and 0°. It may be determined, based on the correspondence between the angle and the steering lane selection cost value, that steering lane selection cost values respectively corresponding to the lane B and the lane C may be 0.3 and 0.

Side vehicle risk lane selection cost value: indicates a risk of collision with a side vehicle during a process of driving a vehicle to a bifurcated lane. A larger side vehicle risk lane selection cost value indicates higher risk of collision between the vehicle and the side vehicle.

In an example, calculation of the side vehicle risk lane selection cost value may include: determining, based on a speed of the side vehicle of the vehicle, a side vehicle risk lane selection cost value corresponding to each bifurcated lane.

For any bifurcated lane, if an adjacent lane of a target lane on which the vehicle is currently located can also lead to the bifurcated lane and there is no need for continuous lane change, a side vehicle risk lane selection cost value corresponding to any bifurcated lane may be determined based on a vehicle speed of a vehicle on the adjacent lane. The vehicle on the adjacent lane is a side vehicle of the vehicle. The side vehicle may be laterally in front of the vehicle, directly on the side of the vehicle, laterally in rear of the vehicle, or the like. For any bifurcated lane, if the bifurcated lane can be driven into only from a target lane on which the vehicle is currently located and there is no need for continuous lane change, a side vehicle risk lane selection cost value corresponding to the bifurcated lane may be 0.

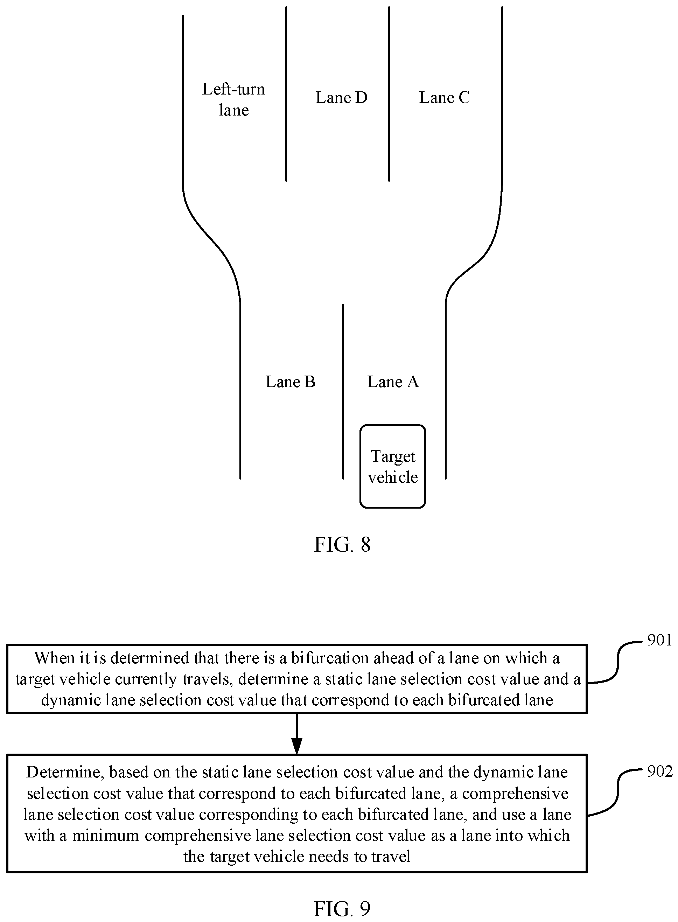

As shown in FIG. 8, a lane A on which a vehicle currently travels has an adjacent lane B, and the lane A bifurcates into a lane C and a lane D ahead. Because both the lane A and the lane B can lead to the lane D, a side vehicle risk lane selection cost value corresponding to the lane D may be calculated based on a vehicle traveling on the lane B. Because the lane C can be driven into only from the lane A, a side vehicle risk lane selection cost value of the lane C may be 0.

The vehicle-mounted terminal may store a correspondence between the speed of the side vehicle and the side vehicle risk lane selection cost value. The vehicle-mounted terminal may determine, based on the detected speed of the side vehicle and the correspondence, the side vehicle risk lane selection cost value corresponding to the bifurcated lane.

In another example, the calculation of the side vehicle risk lane selection cost value may further include: determining a collision risk value between the vehicle and a side-rear vehicle in each bifurcated lane based on a speed of the vehicle and a speed of a side vehicle of the vehicle, and determining, based on the collision risk value corresponding to each bifurcated lane, a side vehicle risk lane selection cost value corresponding to each bifurcated lane.

A calculation process of the collision risk value may include: predicting whether a track line of the vehicle and a track line of the side vehicle have an intersection point in the bifurcated lane, so as to determine the collision risk value. Further, refer to the following formula:

$$\begin{cases} t_{ego} = \dfrac{Distance_{egoHeadToTargerPos}}{egoSpeed} \\ t_{obj} = \dfrac{Ditance_{objHeadToTargerPos}}{objSpeed} \\ \Delta t = \left| t_{ego} - t_{obj} \right| < threshold \end{cases}$$

Herein, $t_{ego}$ indicates time it takes for a vehicle to travel to a target point in a bifurcated lane, $Distance_{egoHeadToTargerPos}$ indicates a distance between the vehicle and the target point in the bifurcated lane, and $egoSpeed$ indicates a speed of the vehicle. $t_{obj}$ indicates time it takes for a side vehicle to travel to the target point in the bifurcated lane, $Ditance_{objHeadToTargerPos}$ indicates a distance between the side vehicle and the target point in the bifurcated lane, and $objSpeed$ indicates a speed of the side vehicle. $threshold$ is a time difference threshold. $\Delta t$ is

a time difference, and a smaller $\Delta t$ indicates a higher probability that the vehicle collides with the side vehicle.

A plurality of target points may be set for the bifurcated lane, and then a collision risk value may be determined based on minimum time differences corresponding to the plurality of target points. A larger time difference indicates a higher collision risk value. After a collision risk value corresponding to each bifurcated lane is determined, the collision risk value may be used as a side vehicle risk lane selection cost value.

In a possible implementation, if a vehicle has a high right of way on a bifurcated lane, a side vehicle risk lane selection cost value corresponding to the bifurcated lane may be reduced by using a weighting coefficient, or the side vehicle risk lane selection cost value of the bifurcated lane is set to 0. Whether the vehicle has a high right of way on the bifurcated lane may be determined based on the steering lane selection cost value. For example, a bifurcated lane corresponding to a lowest steering lane selection cost value may be determined as a road with a high right of way.

In a possible implementation, the collision risk value or the side vehicle risk lane selection cost value corresponding to each bifurcated lane may be attenuated and superimposed on another bifurcated lane. For any two bifurcated lanes, if the two bifurcated lanes are on a same side, a collision risk value or a side vehicle risk lane selection cost value corresponding to one lane that is relatively close to a vehicle in a direction perpendicular to a road may be attenuated and superimposed on the other lane. For example, the collision risk value or the side vehicle risk lane selection cost value corresponding to the lane that is relatively close to the vehicle may be multiplied by an attenuation coefficient, to obtain a collision risk value or a side vehicle risk lane selection cost value that needs to be superimposed on the other lane. The attenuation coefficient is negatively correlated with a quantity of lanes between the two bifurcated lanes. In this way, the vehicle may travel across a lane to a lane with a relatively low collision risk value or a side vehicle risk lane selection cost value, thereby improving driving safety.

Bifurcation distance lane selection cost value: indicates a traveling risk corresponding to a bifurcated lane to which a vehicle needs to switch. A shorter distance between the vehicle and a lane bifurcation indicates a higher traveling risk corresponding to the bifurcated lane to which the vehicle needs to switch, and a larger bifurcation distance lane selection cost value.

In an example, calculation of the bifurcation distance lane selection cost value may include: if a first distance between a bifurcation and the vehicle is currently less than or equal to a distance threshold, and a second distance between the bifurcation and the vehicle in a previous detection cycle is greater than a threshold, determining a specified value as a bifurcation distance lane selection cost value corresponding to each bifurcated lane; or if a first distance between a bifurcation and the vehicle is currently less than or equal to a distance threshold, and a second distance between the bifurcation and the vehicle in a previous detection cycle is less than or equal to the distance threshold, determining, based on the first distance and the second lane that is selected in the previous detection cycle, a bifurcation distance lane selection cost value corresponding to each bifurcated lane.

During implementation, the vehicle may determine, based on a specified detection cycle, whether there is a bifurcation ahead of the vehicle, and determine whether a first distance between the bifurcation and the vehicle is less than or equal to a distance threshold. The distance threshold may be the first distance threshold in the foregoing embodiment. After determining that the first distance is less than or equal to the first distance threshold, the vehicle-mounted terminal of the vehicle may start to calculate a lane selection cost value corresponding to a bifurcated lane in each cycle based on the detection cycle, and determine a lane into which the vehicle needs to travel. The lane may be referred to as a second lane.

If the first distance between the bifurcation and the vehicle is currently less than or equal to the first distance threshold, and the second distance between the bifurcation and the vehicle in the previous detection cycle is greater than the threshold, it indicates that a current detection cycle is a first detection cycle for calculating each lane selection cost value of the bifurcated lane. In this detection cycle, a specified value may be determined as a bifurcation distance lane selection cost value corresponding to each bifurcated lane, that is, bifurcation distance lane selection cost values corresponding to all bifurcated lanes may be equal. The specified value may be 0.

If the first distance between the bifurcation and the vehicle is currently less than or equal to the distance threshold, and the second distance between the bifurcation and the vehicle in the previous detection cycle is less than or equal to the distance threshold, it indicates that a current detection cycle is an Nth detection cycle for calculating each lane selection cost value of the bifurcated lane, where N is greater than or equal to 2. In this case, a bifurcation distance lane selection cost value corresponding to each bifurcated lane may be determined based on the first distance and the second lane that is selected in the previous detection cycle.

Because the second lane is selected in the previous detection cycle, the vehicle may have a trend of traveling to the second lane. In this case, if comprehensive lane selection cost values corresponding to bifurcated lanes do not differ greatly, the second lane may be preferentially selected, to avoid frequent switching of the vehicle to a lane that needs to enter. In addition, a shorter distance from the lane bifurcation indicates a greater lateral distance the vehicle needs to move in a unit time to switch to the lane that needs to enter, and a higher probability of collision with another vehicle. Therefore, for the second lane selected in the previous monitoring cycle, a bifurcation distance lane selection cost value corresponding to the second lane may be less than a bifurcation distance lane selection cost value of another lane. For example, the bifurcation distance lane selection cost value corresponding to the second lane may be determined as 0. For another lane that is not selected in the previous monitoring cycle, a bifurcation distance lane selection cost value corresponding to the another lane may be determined based on the first distance. The bifurcation distance lane selection cost value is negatively correlated with the first distance. In this way, as the distance between the vehicle and the lane bifurcation is shorter, the bifurcation distance lane selection cost value corresponding to the lane that is not selected in the previous detection cycle is larger. As the distance between the vehicle and the lane bifurcation becomes shorter, it is more likely that the vehicle selects a same lane in the current detection cycle as in the previous detection cycle. This can prevent the vehicle from frequently switching a traveling direction, reduce a traveling risk, and improve ride experience of a person in the vehicle.

In this embodiment of this application, when a vehicle faces a plurality of bifurcated lanes, a comprehensive lane selection cost value may be determined based on a corresponding braking degree, a steering angle, a collision risk of the vehicle traveling into each bifurcated lane, comprehensive navigation information, and a distance between the vehicle and a bifurcation, and then a lane corresponding to a lowest comprehensive lane selection cost value is determined as a lane into which the vehicle needs to travel. This can improve flexibility of selecting a bifurcated lane, and reduce a traveling risk of the vehicle.

FIG. 9 is a flowchart of a bifurcated lane selection method according to this application. The method procedure may also be performed by a vehicle-mounted terminal, to select a suitable lane for a vehicle in bifurcated lanes. Refer to FIG. 9. The method includes the following steps.

Step 901: When it is determined that there is a bifurcation ahead of a lane on which a vehicle currently travels, determine a static lane selection cost value and a dynamic lane selection cost value that correspond to each bifurcated lane.

In this method procedure, for the plurality of types of lane selection cost values, the navigation lane selection cost value and the steering lane selection cost value may be referred to as a static lane selection cost value, and the bifurcation distance lane selection cost value, the side vehicle risk lane selection cost value, and the deceleration lane selection cost value may be referred to as a dynamic lane selection cost value. For a specific calculation manner of the static lane selection cost value and the dynamic lane selection cost value, refer to the foregoing embodiments. Details are not described herein.

In a possible case, the navigation lane selection cost value in the static lane selection cost value may be output by a navigation module in an autonomous driving system. When the navigation module of the vehicle can output the navigation lane selection cost value, the static lane selection cost value may be only the navigation lane selection cost value. When the navigation module of the vehicle cannot output the navigation lane selection cost value, the steering lane selection cost value may be calculated. In this way, a calculation amount of the vehicle-mounted terminal can be reduced, and calculation efficiency of a lane selection cost value can be improved.

Step 902: Determine, based on the static lane selection cost value and the dynamic lane selection cost value that correspond to each bifurcated lane, a comprehensive lane selection cost value corresponding to each bifurcated lane, and use a lane with a minimum comprehensive lane selection cost value as a lane into which the vehicle needs to travel.

In a process in which the vehicle-mounted terminal calculates the comprehensive lane selection cost value based on a monitoring cycle, if it is determined that a distance between the vehicle and a bifurcation is less than a third distance threshold, prompt information may be displayed on a navigation interface of the vehicle. The prompt information indicates that a first lane is a lane to enter. For example, the prompt information may be a highlight display of the first lane on the navigation page. In this way, a driver may be reminded that the first vehicle is to enter.

If the driver does not want to drive to the first lane after seeing the prompt information, the driver may gently turn a steering wheel or push a control lever to switch a lane into which the vehicle is to travel to a lane adjacent to the first lane. For example, if the driver wants to switch the lane into which the vehicle is to travel to a lane to the left of the first lane, the driver may gently turn the steering wheel to the left, or push a control lever (for example, a light control lever) downward, so as to trigger a lane change instruction carrying a lane change direction. In response to the lane change instruction, the vehicle-mounted terminal may determine a third lane corresponding to the first lane in the lane change direction as the lane into which the vehicle needs to travel. In addition, the prompt information may be updated on the navigation interface of the vehicle, to prompt that the vehicle is to travel into the third lane. After the third lane corresponding to the first lane in the lane change direction is determined, the prompt information may be switched on the navigation interface of the vehicle, and switched-to prompt information indicates that the vehicle is to travel into the third lane. For example, the lane switch from the first lane to the third lane may be highlighted on the navigation interface of the vehicle.

In this embodiment of this application, when a vehicle faces a plurality of bifurcated lanes, a static lane selection cost value and a dynamic lane selection cost value of each bifurcated lane may be determined, a lane corresponding to a lowest traveling risk is selected from the plurality of bifurcated lanes based on the static lane selection cost value and the dynamic lane selection cost value, and the selected lane may be prompted to the driver. In addition, in this embodiment of this application, a simple lane change operation is further provided for a driver, so that the driver can participate in bifurcated lane selection, and a traveling risk of the vehicle can be further reduced.

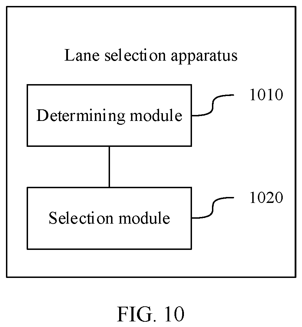

FIG. 10 shows a lane selection apparatus according to an embodiment of this application. The apparatus may be the computer device in the foregoing embodiments. With reference to FIG. 10, the apparatus includes the following modules.

A determining module 1010 is configured to: when it is determined that there is a bifurcation ahead of a lane on which a vehicle currently travels, determine, based on a quantity of lane changes needed for the vehicle to travel from each bifurcated lane to a next intersection on a navigation route, a navigation lane selection cost value corresponding to each bifurcated lane, and determine, based on a speed decrease needed for the vehicle to travel to each bifurcated lane, a deceleration lane selection cost value corresponding to each bifurcated lane; and determine, based on the navigation lane selection cost value and the deceleration lane selection cost value, a comprehensive lane selection cost value corresponding to each bifurcated lane. Specifically, a determining function in step 501 and step 502 and other implicit steps may be implemented.

A selection module 1020 is configured to select, based on the comprehensive lane selection cost value corresponding to each bifurcated lane, a first lane from a plurality of bifurcated lanes as a lane into which the vehicle needs to travel. Specifically, a selection function in step 503 and other implicit steps may be implemented.

Optionally, a lane selection cost value based on which the comprehensive lane selection cost value is determined further includes a steering lane selection cost value. The determining module 1010 is configured to determine, based on an angle between each bifurcated lane and the current lane at the bifurcation, a steering lane selection cost value corresponding to each bifurcated lane, where the steering lane selection cost value is positively correlated with the angle.

Optionally, the lane selection cost value based on which the comprehensive lane selection cost value is determined further includes a side vehicle risk lane selection cost value. The determining module 1010 is configured to determine, based on a speed of a side vehicle of the vehicle, a side vehicle risk lane selection cost value corresponding to each bifurcated lane.

Optionally, the determining module 1010 is configured to: determine a collision risk value between the vehicle and the side vehicle in each bifurcated lane based on a speed of the vehicle and the speed of the side vehicle of the vehicle; and determine, based on the collision risk value corresponding to each bifurcated lane, the side vehicle risk lane selection cost value corresponding to each bifurcated lane.

Optionally, the lane selection cost value based on which the comprehensive lane selection cost value is determined further includes a bifurcation distance lane selection cost value. The determining module 1010 is configured to: if a first distance between the bifurcation and the vehicle is currently less than or equal to a distance threshold, and a second distance between the bifurcation and the vehicle in a previous detection cycle is greater than a threshold, determine a specified value as a bifurcation distance lane selection cost value corresponding to each bifurcated lane; or if a first distance between the bifurcation and the vehicle is currently less than or equal to a distance threshold, and a second distance between the bifurcation and the vehicle in a previous detection cycle is less than or equal to the distance threshold, determine, based on the first distance and a second lane that is selected in the previous detection cycle, a bifurcation distance lane selection cost value corresponding to each bifurcated lane.

Optionally, the determining module 1010 is configured to: determine a bifurcation distance lane selection cost value corresponding to the second lane as 0; and determine, based on the first distance, a bifurcation distance lane selection cost value corresponding to another lane other than the second lane, where the bifurcation distance lane selection cost value is negatively correlated with the first distance.

Optionally, the apparatus further includes a prompt module, configured to display prompt information on a navigation interface of the vehicle. The prompt information indicates that the first lane is a lane to enter.

Optionally, the apparatus further includes a lane change module, configured to determine, in response to a lane change instruction carrying a lane change direction, a third lane corresponding to the first lane in the lane change direction as a lane into which the vehicle needs to travel.

Optionally, the lane change instruction is triggered by a steering wheel or a control lever.

It should be noted that when the lane selection apparatus provided in the foregoing embodiment is used to select a lane, division of the foregoing functional modules is only used as an example for description. During actual application, the foregoing functions may be allocated to different functional modules for implementation based on a requirement. To be specific, an inner structure of a device is divided into different functional modules, to implement all or some of the functions described above. In addition, the lane selection apparatus provided in the foregoing embodiment and the lane selection method embodiment pertain to a same concept. For specific implementation processes thereof, refer to the method embodiments. Details are not described herein.

An embodiment of this application provides a computer program product. The computer program product includes computer instructions, and the computer instructions are stored in a computer-readable storage medium. A processor of a computer device reads the computer instructions from the computer-readable storage medium, and the processor executes the computer instructions, so that the computer performs the foregoing lane selection method.

All or some of the foregoing embodiments may be implemented by software, hardware, firmware, or any combination thereof. When the software is used for implementation, all or some of the embodiments may be implemented in a form of a computer program product. The computer program product includes one or more computer instructions. When the computer program instructions are loaded and executed on a device, all or some of the processes or functions according to embodiments of this application are generated. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by the device, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive).

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

In this application, terms such as "first" and "second" are used to distinguish between same items or similar items that have basically same purposes or functions. It should be understood that there is no logical or time sequence dependency between "first" and "second", and a quantity and an execution sequence are not limited. It should also be understood that although the following descriptions use terms such as first and second to describe various elements, these elements should not be limited by the terms. These terms are merely used to distinguish one element from another. For example, a first lane may be referred to as a second lane without departing from the scope of the various examples, and similarly, a second lane may be referred to as a first lane. Both the first lane and the second lane may be lanes, and in some cases, may be separate and different network devices. The term "at least one" in this application means one or more, and the term "a plurality of" in this application means two or more.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

**Claims**

1.  A lane selection method, wherein the method comprises:

    when it is determined that there is a bifurcation ahead of a lane on which a vehicle currently travels, determining, based on a quantity of lane changes needed for the vehicle to travel from each bifurcated lane to a next intersection on a navigation route, a navigation lane selection cost value corresponding to each bifurcated lane, and determining, based on a speed decrease needed for the vehicle to travel to each bifurcated lane, a deceleration lane selection cost value corresponding to each bifurcated lane;
    determining, based on the navigation lane selection cost value and the deceleration lane selection cost value, a comprehensive lane selection cost value corresponding to each bifurcated lane; and
    selecting, based on the comprehensive lane selection cost value corresponding to each bifurcated lane, a first lane from a plurality of bifurcated lanes as a lane into which the vehicle needs to travel.

2.  The method according to claim 1, wherein
    a lane selection cost value based on which the comprehensive lane selection cost value is determined further comprises a steering lane selection cost value, wherein the method comprises:
    determining, based on an angle between each bifurcated lane and the current lane at the bifurcation, a steering lane selection cost value corresponding to each bifurcated lane, wherein the steering lane selection cost value is positively correlated with the angle.

3.  The method according to claim 1 or 2, wherein
    the lane selection cost value based on which the comprehensive lane selection cost value is determined further comprises a side vehicle risk lane selection cost value, wherein the method comprises:
    determining, based on a speed of a side vehicle of the vehicle, a side vehicle risk lane selection cost value corresponding to each bifurcated lane.

4.  The method according to claim 3, wherein the determining, based on a speed of a side vehicle of the vehicle, a side vehicle risk lane selection cost value corresponding to each bifurcated lane comprises:

    determining a collision risk value between the vehicle and the side vehicle in each bifurcated lane based on a speed of the vehicle and the speed of the side vehicle of the vehicle; and
    determining, based on the collision risk value corresponding to each bifurcated lane, the side vehicle risk lane selection cost value corresponding to each bifurcated lane.

5.  The method according to any one of claims 1 to 4, wherein
    the lane selection cost value based on which the comprehensive lane selection cost value is determined further comprises a bifurcation distance lane selection cost value, wherein the method comprises:

    if a first distance between the bifurcation and the vehicle is currently less than or equal to a distance threshold, and a second distance between the bifurcation and the vehicle in a previous detection cycle is greater than a threshold, determining a specified value as a bifurcation distance lane selection cost value corresponding to each bifurcated lane; or
    if a first distance between the bifurcation and the vehicle is currently less than or equal to a distance threshold, and a second distance between the bifurcation and the vehicle in a previous detection cycle is less than or equal to the distance threshold, determining, based on the first distance and a second lane that is selected in the previous detection cycle, a bifurcation distance lane selection cost value corresponding to each bifurcated lane.

6.  The method according to claim 5, wherein the determining, based on the first distance and a second lane that is selected in the previous detection cycle, a bifurcation distance lane selection cost value corresponding to each bifurcated lane comprises:

    determining a bifurcation distance lane selection cost value corresponding to the second lane as 0; and
    determining, based on the first distance, a bifurcation distance lane selection cost value corresponding to another lane other than the second lane, wherein the bifurcation distance lane selection cost value is negatively correlated with the first distance.

7. The method according to any one of claims 1 to 6, wherein after the selecting a first lane from a plurality of bifurcated lanes, the method further comprises: displaying prompt information on a navigation interface of the vehicle, wherein the prompt information indicates that the first lane is a lane to enter.

8. The method according to claim 7, wherein the method further comprises:
determining, in response to a lane change instruction carrying a lane change direction, a third lane corresponding to the first lane in the lane change direction as the lane into which the vehicle needs to travel.

9. The method according to claim 8, wherein the method further comprises:
triggering, by a steering wheel or a control lever, the lane change instruction.

10. A lane selection apparatus, wherein the apparatus comprises:

a determining module, configured to: when it is determined that there is a bifurcation ahead of a lane on which a vehicle currently travels, determine, based on a quantity of lane changes needed for the vehicle to travel from each bifurcated lane to a next intersection on a navigation route, a navigation lane selection cost value corresponding to each bifurcated lane, and determine, based on a speed decrease needed for the vehicle to travel to each bifurcated lane, a deceleration lane selection cost value corresponding to each bifurcated lane; and determine, based on the navigation lane selection cost value and the deceleration lane selection cost value, a comprehensive lane selection cost value corresponding to each bifurcated lane; and
a selection module, configured to select, based on the comprehensive lane selection cost value corresponding to each bifurcated lane, a first lane from a plurality of bifurcated lanes as a lane into which the vehicle needs to travel.

11. The apparatus according to claim 10, wherein

a lane selection cost value based on which the comprehensive lane selection cost value is determined further comprises a steering lane selection cost value; and
the determining module is configured to determine, based on an angle between each bifurcated lane and the current lane at the bifurcation, a steering lane selection cost value corresponding to each bifurcated lane, wherein the steering lane selection cost value is positively correlated with the angle.

12. The apparatus according to claim 10 or 11, wherein

the lane selection cost value based on which the comprehensive lane selection cost value is determined further comprises a side vehicle risk lane selection cost value; and
the determining module is configured to determine, based on a speed of a side vehicle of the vehicle, a side vehicle risk lane selection cost value corresponding to each bifurcated lane.

13. The apparatus according to claim 12, wherein the determining module is configured to: determine a collision risk value between the vehicle and the side vehicle in each bifurcated lane based on a speed of the vehicle and the speed of the side vehicle of the vehicle; and determine, based on the collision risk value corresponding to each bifurcated lane, the side vehicle risk lane selection cost value corresponding to each bifurcated lane.

14. The apparatus according to any one of claims 10 to 13, wherein

the lane selection cost value based on which the comprehensive lane selection cost value is determined further comprises a bifurcation distance lane selection cost value; and
the determining module is configured to: if a first distance between the bifurcation and the vehicle is currently less than or equal to a distance threshold, and a second distance between the bifurcation and the vehicle in a previous detection cycle is greater than a threshold, determine a specified value as a bifurcation distance lane selection cost value corresponding to each bifurcated lane; or if a first distance between the bifurcation and the vehicle is currently less than or equal to a distance threshold, and a second distance between the bifurcation and the vehicle in a previous detection cycle is less than or equal to the distance threshold, determine, based on the first distance and a second lane that is selected in the previous detection cycle, a bifurcation distance lane selection cost value corresponding to each bifurcated lane.

15. The apparatus according to claim 14, wherein the determining module is configured to: determine a bifurcation distance lane selection cost value corresponding to the second lane as 0; and determine, based on the first distance, a bifurcation distance lane selection cost value corresponding to another lane other than the second lane, wherein the bifurcation distance lane selection cost value is negatively correlated with the first distance.

16. The apparatus according to any one of claims 10 to

27 **EP 4 636 359 A1** 28

15, wherein the apparatus further comprises a prompt module, wherein

the prompt module is configured to display prompt information on a navigation interface of the vehicle, wherein the prompt information indicates that the first lane is a lane to enter.

17. The apparatus according to claim 16, wherein the apparatus further comprises a lane change module, wherein

the lane change module is configured to determine, in response to a lane change instruction carrying a lane change direction, a third lane corresponding to the first lane in the lane change direction as the lane into which the vehicle needs to travel.

18. The apparatus according to claim 17, wherein the lane change instruction is triggered by a steering wheel or a control lever.

19. A computer device, wherein the computer device comprises a memory and a processor, the memory is configured to store computer instructions, and the processor is configured to execute the computer instructions stored in the memory, so that the computer device performs the method according to any one of claims 1 to 9.

20. A computer-readable storage medium, wherein the computer-readable storage medium stores computer program code, and when the computer program code is executed by a computer device, the computer device performs the method according to any one of claims 1 to 9.

15

FIG. 1

FIG. 2

| Sensing | Fusion | Positioning | Map |

Road structure cognition → Prediction

Planning control

FIG. 3

Computer device 100

Processor 101

Memory 102

Bus 103

FIG. 4

When it is determined that there is a bifurcation ahead of a lane on which a vehicle currently travels, determine a plurality of types of lane selection cost values corresponding to each bifurcated lane ⟍ 501

Determine, based on the plurality of types of lane selection cost values corresponding to each bifurcated lane, a comprehensive lane selection cost value corresponding to each bifurcated lane ⟍ 502

Select, based on the comprehensive lane selection cost value corresponding to each bifurcated lane, a first lane from a plurality of bifurcated lanes as a lane into which the vehicle needs to travel ⟍ 503

FIG. 5

Lane B    Lane C    Right-turn lane

Bifurcation

Lane A

Target vehicle

FIG. 6

FIG. 7

| Left-turn lane | Lane D | Lane C |
|---|---|---|

Lane B    Lane A

Target vehicle

FIG. 8

When it is determined that there is a bifurcation ahead of a lane on which a target vehicle currently travels, determine a static lane selection cost value and a dynamic lane selection cost value that correspond to each bifurcated lane — 901

Determine, based on the static lane selection cost value and the dynamic lane selection cost value that correspond to each bifurcated lane, a comprehensive lane selection cost value corresponding to each bifurcated lane, and use a lane with a minimum comprehensive lane selection cost value as a lane into which the target vehicle needs to travel — 902

FIG. 9

Lane selection apparatus

Determining module — 1010

Selection module — 1020

FIG. 10

<table>
<tr><td colspan="2" align="center">**INTERNATIONAL SEARCH REPORT**</td><td>International application No.<br><br>**PCT/CN2023/129304**</td></tr>
</table>

**A. CLASSIFICATION OF SUBJECT MATTER**

G01C21/36(2006.01)i; G01C21/20(2006.01)i

According to International Patent Classification (IPC) or to both national classification and IPC

**B. FIELDS SEARCHED**

Minimum documentation searched (classification system followed by classification symbols)

IPC: G01C

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; IEEE: 车道, 叉道, 岔道, 分岔, 分叉, 变道, 次, 速度, 车速, 减速, 权值, 权重, 加权, road?, way?, fork, cross+, speed, slow+, weighting

**C. DOCUMENTS CONSIDERED TO BE RELEVANT**

| Category* | Citation of document, with indication, where appropriate, of the relevant passages | Relevant to claim No. |
|---|---|---|
| X | CN 109782776 A (BEIJING BAIDU NETCOM SCIENCE AND TECHNOLOGY CO., LTD.) 21 May 2019 (2019-05-21) description, paragraphs [0004]-[0209], and figures 1-12 | 1-20 |
| A | CN 112449675 A (HITACHI AUTOMOTIVE SYSTEMS, LTD. et al.) 05 March 2021 (2021-03-05) entire document | 1-20 |
| A | CN 1707224 A (NISSAN MOTOR CO., LTD.) 14 December 2005 (2005-12-14) entire document | 1-20 |
| A | JP 2017146131 A (PIONEER ELECTRONIC CORP. et al.) 24 August 2017 (2017-08-24) entire document | 1-20 |

☐ Further documents are listed in the continuation of Box C. ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **22 November 2023** | **24 November 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

| International application No. |
| --- |
| **PCT/CN2023/129304** |

| Patent document cited in search report | | | Publication date (day/month/year) | Patent family member(s) | Publication date (day/month/year) |
| --- | --- | --- | --- | --- | --- |
| CN | 109782776 | A | 21 May 2019 | None | |
| CN | 112449675 | A | 05 March 2021 | None | |
| CN | 1707224 | A | 14 December 2005 | None | |
| JP | 2017146131 | A | 24 August 2017 | None | |

Form PCT/ISA/210 (patent family annex) (July 2022)

**REFERENCES CITED IN THE DESCRIPTION**

**Patent documents cited in the description**

- CN 202211600351